# EUROPÄISCHE PATENTSCHRIFT

(11) **EP 2 563 491 B1**
(45) Veröffentlichungstag und Bekanntmachung des Hinweises auf die Patenterteilung: **17.09.2014**
(21) Anmeldenummer: 11714249.7
(22) Anmeldetag: 04.04.2011
(51) Int. Cl.: B01D 19/04, C11D 3/00, C11D 3/37, D21C 3/28, D21H 21/12, C08L 83/04

(54) **ENTSCHÄUMERZUSAMMENSETZUNGEN**
ANTIFOAM COMPOSITIONS
COMPOSITIONS ANTI-MOUSSE

(30) Priorität: 28.04.2010 DE 102010028306
(43) Veröffentlichungstag der Anmeldung: 06.03.2013
(73) Patentinhaber: Wacker Chemie AG, 81737 München (DE)
(72) Erfinder: BECKER, Richard, 84489 Burghausen (DE); BURGER, Willibald, 84489 Burghausen (DE); RAUTSCHEK, Holger, 01612 Nünchritz (DE)
(74) Vertreter: Deffner-Lehner, Maria
(86) Internationale Anmeldenummer: PCT/EP2011/055191
(87) Internationale Veröffentlichungsnummer: WO 2011/134746

(56) Entgegenhaltungen:
- EP-A1- 1 076 073
- EP-A1- 1 167 456
- EP-A1- 1 681 083
- EP-A2- 1 424 117
- WO-A1-98/00216
- WO-A1-2005/117611
- DE-A1-102004 051 897
- GB-A- 2 350 117

## Beschreibung

Die Erfindung betrifft Zusammensetzungen, enthaltend Organosiliciumverbindungen mit verschiedenen Viskositäten, Verfahren zu deren Herstellung und deren Verwendung als Entschäumer.

In vielen flüssigen, insbesondere wässrigen Systemen, die als erwünschte oder auch unerwünschte Bestandteile oberflächenaktive Verbindungen enthalten, können durch Schaumbildung Probleme auftreten, wenn diese Systeme in mehr oder weniger intensiven Kontakt mit gasförmigen Stoffen gebracht werden, beispielsweise beim Begasen von Abwässern, beim intensiven Rühren von Flüssigkeiten, bei Destillations-, Wasch- oder Färbeprozessen oder bei Abfüllvorgängen.

Die Bekämpfung dieses Schaumes kann auf mechanischem Wege oder durch den Zusatz von Entschäumern erfolgen. Dabei haben sich Entschäumer auf Siloxanbasis besonders bewährt. Entschäumer auf Basis von Siloxanen werden beispielsweise nach US 3,383,327 A durch Erhitzen von hydrophiler Kieselsäure in Polydimethylsiloxanen hergestellt. Durch Anwendung von basischen Katalysatoren kann die Wirksamkeit derartiger Entschäumer verbessert werden, wie in US 3,560,401 A offenbart. Eine Alternative ist die Verteilung von hydrophobierter Kieselsäure in einem Polydimethylsiloxan, z.B. entsprechend DE 29 25 722 A1.

Jedoch ist die Wirksamkeit der erhaltenen Entschäumer meist verbesserungswürdig. So beschreibt US-A 4 145 308 beispielsweise eine Entschäumerzubereitung, die neben einem Polydiorganosiloxan und Kieselsäure noch ein Copolymeres aus (CH₃)₃SiO_{1/2}- und SiO₂-Bausteinen enthält.

Copolymere aus (CH₃)₃SiO_{1/2}- und SiO₂-Bausteinen sollen auch in Kombination mit Siloxanen, die endständige Langalkylgruppen tragen, vorteilhaft sein, wie in EP-A 301 531 (korrespondierende US 4,919,843 A) beschrieben. In diesen Formulierungen werden auch Mischungen aus pyrogenen und gefällten Kieselsäuren eingesetzt.

In EP-B 726 086 wird eine verbesserte Wirksamkeit der Entschäumerformulierung dadurch erreicht, dass eine Mischung aus vorbehandelter hydrophobierter Kieselsäure und in situ hydrophobierter Kieselsäure eingesetzt wird.

Die Verwendung von anvernetzten, zum Teil bereits gummiähnlichen Polydimethylsiloxanen soll zur Steigerung der Entschäumerwirkung beitragen. Hierzu sei beispielsweise auf US-A 2,632,736, EP-B 163 541, EP-B 217 501, EP-A 273 448 und EP-A 434 060 verwiesen. Allerdings sind diese Produkte im Allgemeinen sehr hochviskos und schlecht handhabbar oder weiter verarbeitbar.

Alternativ zu anvernetzten Siloxanen werden auch lineare hochviskose Polydimethylsiloxane in Entschäumerformulierungen eingesetzt.

Nach der Lehre von US-A 4 395 352 wird bereits eine deutliche Verbesserung der Entschäumerwirkung erreicht, wenn Polydimethylsiloxane mit einer Viskosität von bis zu 30 000 mm²/s in den Formulierungen eingesetzt werden.

In EP-B 163 398 werden Öle bis zu einer Viskosität von bis zu 200 000 mm²/s zur Verbesserung der Entschäumerwirkung in Mischungen mit Ölen mit 100-5000 mm²/s, Siliconharz und Kieselsäure eingesetzt. Dabei kann die Entschäumerwirkung bereits dadurch verbessert werden, dass das hochviskose Siloxan nachträglich zugemischt wird.

Gemäß EP 1 750 524 B1 wird die Entschäumungswirkung dagegen besser, wenn zu einer Emulsion mit einem Entschäumer auf der Basis eines Diorganosiloxans mit einer Viskosität von 1 000 - 10 000 mPas ein Diorganosiloxan mit einer Viskosität von 100 - 1 050 mPas zugegeben werden.

EP 1167456 beschreibt Enschäumerzusammensetzungen die neben einem Umsetzungsprodukt von Polyorganosiloxane, auch ein Mineralöl , ein Polyethersiloxane und mindestens einen Füllstoff auf Basis von Kieselsäure enthalten.

WO 2005117611 offenbart ein Verfahren zur Reduzierung des Schäumens einer wässrigen Flüssigkeit durch Zugabe eines Antischaummittels . Das Antischaummittel wird aus einer Mischung von linearen Diorganopolysiloxanen mit einer Viskosität von 100 bis 10000 mPa.s bei 25 °C , Kieselsäuren und niedrigviskose Diorganopolysiloxane mit einer Viskosität von 100 bis 1050 mPa.s hergestellt.

Die bekannten Entschäumerformulierungen weisen jedoch in stark schäumenden tensidreichen Systemen nicht immer eine ausreichend lang anhaltende Wirksamkeit und Verträglichkeit auf oder sind wegen der hohen Viskosität aufgrund des erreichten Verzweigungs- oder Vernetzungsgrades schwer handhabbar. Es bestand die Aufgabe Entschäumerformulierungen bereitzustellen, bei denen die oben genannten Nachteile vermieden werden.

Gegenstand der Erfindung sind Zusammensetzungen enthaltend
(A) im Wesentlichen lineare Organopolysiloxane mit einer Viskosität von 50 - 200 mm²/s bei 25°C und 1013 hPa der allgemeinen Formel

   R²_{3-g}(R³O)_{g}Si- [OSiR²₂]ₙ-OSi(OR³)_{g}R²_{3-g} (IV),

   worin
   R² gleich oder verschieden sein kann und einen einwertigen, gegebenenfalls halogenierten Kohlenwasserstoffrest mit 1-30 Kohlenstoffatomen, vorzugsweise 1-18 Kohlenstoffatomen, oder ein Wasserstoffatom bedeutet,
   R³ gleich oder verschieden sein kann und ein Wasserstoffatom oder einen einwertigen Kohlenwasserstoffrest mit 1-4 Kohlenstoffatomen bedeutet,
   n eine ganze Zahl ist und einen solchen Wert hat, dass die Viskosität der Organopolysiloxane (A) 50 - 200 mm²/s bei 25°C und 1013 hPa, beträgt, und
   g 0 oder 1 ist,
      mit der Maßgabe, dass die Organopolysiloxane der Formel (IV) durchschnittlich einen Gehalt an Si-gebundenen OH-Gruppen von 30-500 Gew.-ppm aufweisen,
(B) Organopolysiloxane mit einer Viskosität von 500 - 200 000 mm²/s bei 25°C und 1013 hPa aus Einheiten der Formel

   R²_{c}(R³O)_{d}SiO_{(4-c-d)/2} (II),

   worin R² und R³ die oben dafür angegebene Bedeutung haben,
   c 0, 1, 2 oder 3 ist und
   d 0, 1, 2 oder 3 ist,
   mit der Maßgabe, dass die Summe c+d≤3 ist und bei mehr als 50 % aller Einheiten der Formel (II) im Organopolysiloxan (B) die Summe c+d gleich 2 ist,
   wobei die Viskosität der Organopolysiloxane (B) durch die Anzahl der Einheiten der Formel (II) bestimmt wird,
(C) gefällte Kieselsäuren mit einer BET-Oberfläche von 20 - 500 m²/g
(D) pyrogene Kieselsäuren mit einer BET-Oberfläche von 100 - 500 m²/g
(E) Polyethersiloxane mit einem Trübungspunkt kleiner als 50°C
(F) Organopolysiloxanharze, die im Wesentlichen aus R²₃SiO_{1/2} (M) - und SiO_{4/2} (Q) -Einheiten bestehen, wobei R² die oben dafür angegebene Bedeutung hat und wobei das molare Verhältnis von M- zu Q-Einheiten im Bereich von 0,5 bis 2,0, bevorzugt im Bereich von 0,6 bis 1,0, liegt,
(G) gegebenenfalls Organopolysiloxane, die verschieden zu (A) und (B) sind, und
(H) gegebenenfalls wasserunlösliche organische Verbindungen.

Die Reste R² können Alkylreste, Cycloalkylreste, Alkenylreste, Arylreste oder Aralkylreste sein. Beispiele für Reste R und R² sind der Methylrest, der Ethylrest, der Octylrest, der 2-Propenylphenylrest und der Phenylrest. Beispiele für substituierte Reste R² sind halogenierte Kohlenwasserstoffreste, wie der 3,3,3-Trifluorpropylrest. Besonders bevorzugt als Rest R² ist der Methylrest.

Beispiele für Reste R³ ist das Wasserstoffatom, der Methylrest und der Ethylrest.
Besonders bevorzugt als Rest R³ ist das Wasserstoffatom.

Vorzugsweise enthalten die Organopolysiloxane (B) durchschnittlich 30 - 500 Gew.-ppm Si-gebundene OH-Gruppen, d. h. in 0,013 bis 0,22 mol % der Einheiten der Formel (II) ist d = 1 und R³ = H und in 99,78 bis 99,987 mol% der Einheiten der Formel (II) ist d = 0.

Das Organopolysiloxan (B) hat eine Viskosität (gemessen bei 25°C und 1013 hPa) von vorzugsweise von 1 000 - 20 000 mm²/s.

Bevorzugt werden als Organopolysiloxane (B) im Wesentlichen lineare Organopolysiloxane der allgemeinen Formel

R²₃₋ₕ (R³O) ₕSi- [OSiR²₂] ₘ-OSi (OR³) ₕR²₃₋ₕ (V),

worin R² und R³ die oben dafür angegebene Bedeutung haben,
h 0 oder 1 ist und
m eine ganze Zahl ist und einen solchen Wert hat, dass die Viskosität der Organopolysiloxane (A) 500 - 200 000 mm²/s bei 25°C und 1013 hPa, beträgt,
mit der Maßgabe, dass die Organopolysiloxane der Formel (V) durchschnittlich einen Gehalt an Si-gebundenen OH-Gruppen von 30-500 Gew.-ppm aufweisen,
eingesetzt.

Das Gewichtsverhältnis von Komponente (A) zu Komponente (B) ist vorzugsweise 95:5 bis 5:95 insbesondere 80:20 bis 20:80.

Vorzugsweise wird als gefällte Kieselsäure (C) solche mit einer BET-Oberfläche von 50-200 m²/g eingesetzt. Die gefällte

Kieselsäure kann hydrophil sein, es können auch vorbehandelte hydrophobe Kieselsäuren eingesetzt werden. Derartige Produkte sind dem Fachmann bekannt und beispielsweise in EP 726 086 A2 beschrieben.

Die erfindungsgemäßen Zusammensetzungen enthalten gefällte Kieselsäure (C) in Mengen von vorzugsweise 0,1 bis 20 Gewichtsteilen, bevorzugt 1 bis 10 Gewichtsteilen, jeweils bezogen auf 100 Gewichtsteile Komponente (A) und (B).

Die pyrogene Kieselsäure (D) hat eine BET-Oberfläche von 100-500 m²/g, vorzugsweise von 200-400 m²/g. Die pyrogene Kieselsäure kann hydrophil sein, es können auch vorbehandelte hydrophobe Kieselsäuren eingesetzt werden. Derartige Produkte sind dem Fachmann bekannt und beispielsweise in EP 726 086 A2 beschrieben.

Die erfindungsgemäßen Zusammensetzungen enthalten pyrogene Kieselsäure (D) in Mengen von vorzugsweise 0,1 bis 20 Gewichtsteilen, bevorzugt 1 bis 10 Gewichtsteilen, jeweils bezogen auf 100 Gewichtsteile Komponente (A) und (B).

Das Gewichtsverhältnis von Komponente (C) zu Komponente (D) ist vorzugsweise 95:5 bis 5:95 insbesondere 80:20 bis 20:80.

Als Komponente (E) können lineare Polyethersiloxane (E) eingesetzt werden, bei denen die Polyetherreste seitenständig an lineare Siloxanketten über Kohlenwasserstoffreste, vorzugsweise zweiwertige Kohlenwasserstoffreste, SiC-gebunden sind.
Solche lineare Polyether-Polysiloxan-Copolymere sind z. B. in GB 2 350 117 A beschrieben.

Vorzugsweise handelt es sich um Polyethersiloxane, die ein Siloxanrückgrat mit 10 - 200 insbesondere 20 - 100

Siloxaneinheiten haben und bei denen 2-20% insbesondere 5-15% der Siloxaneinheiten einen SiC-gebundenen Polyetherrest Z der Formel

-R⁴-O- [CH₂-CH₂O]ₓ- [CH₂-CH(CH₃)O]_{y}-R⁵ (VI)

tragen, wobei
x einen Wert von 0 - 100, bevorzugt 5 - 50, hat,
y einen Wert von 5 - 100, bevorzugt 5 - 50, aufweist,
wobei das Verhältnis x :y 4:1 bis 0:1 beträgt,
R⁴ einen zweiwertigen Kohlenwasserstoffrest mit 1-10 Kohlenstoffatomen, vorzugsweise einen C₁₋₁₀-Alkylenrest, bedeutet,
R⁵ gleich oder verschieden ist und ein Wasserstoffatom oder einen gegebenenfalls substituierten Kohlenwasserstoffrest mit 1-30 Kohlenstoffatomen oder ein Carboxyrest der Formel -C(O)R⁶, wobei der Rest R⁶ ein C₁₋₃-Alkylrest, wie Methyl- oder Ethylrest ist, bedeutet.

Bevorzugt ist R⁴ ein Rest der Formel -CH₂-CH₂-CH₂- .

Vorzugsweise ist der Rest R⁵ ein Wasserstoffatom oder ein einwertiger Kohlenwasserstoffrest mit 1-18 C-Atomen.
Beispiele für Reste R⁵ sind ein Wasserstoffatom oder ein C₁₋₆-Alkylrest.

Bevorzugt werden Polyethersiloxane (E) der allgemeinen Formel

R²₃Si- [OSiR²₂] ₒ- [OSiZR²]ₚ-OSiR²₃ (VII),

wobei der Polyetherrest Z und der Rest R² die oben dafür angegebene Bedeutung haben,
o eine ganze Zahl von 5 bis 500, bevorzugt 10 bis 100, ist und
p eine ganze Zahl von 1 bis 50, bevorzugt 2 bis 15, ist, eingesetzt.

Vorzugsweise ist in Formel (VII) die Summe o+p 20 bis 200, bevorzugt 20 bis 100, ist, wobei vorzugsweise durchschnittlich 2-20%, insbesondere 5-15%, der Siloxaneinheiten o+p einen SiC-gebundenen Polyetherrest Z aufweisen.

Der Trübungspunkt der Polyethersiloxane (E) wird nach DIN EN 1890 Verfahren A gemessen.
Der Trübungspunkt der Polyethersiloxane (E) ist vorzugsweise kleiner als 40°C, bevorzugt kleiner als 30°C, besonders bevorzugt kleiner als 25°C, d.h. die Polyethersiloxane sind bei 25°C zu weniger als 1% in Wasser löslich.

Als Komponente (E) können auch verzweigte Polyethersiloxane eingesetzt werden. Beispiele für verzweigte Polyethersiloxane sind solche, bei denen die Polyetherreste seitenständig an lineare Siloxanketten über Kohlenwasserstoffreste, vorzugsweise zweiwertige Kohlenwasserstoffreste, SiC-gebunden sind und wobei diese linearen Siloxanketten über seitenständige organische Brücken miteinander verbunden.
Beispiele für diese organischen Brücken sind SiC-gebundene lineare oder verzweigte organische Reste, vorzugsweise zweiwertige Kohlenwasserstoffreste, die ein oder mehrere Heteroatome ausgewählt aus der Gruppe der Sauerstoff- und Stickstoffatome enthalten können, wie Alkylenreste, SiC-gebundene Polyetherreste, die über Alkylenreste, an die Siloxanketten gebunden sind, und SiC-gebundene zweiwertige Kohlenwasserstoffreste, wie Alkylenreste, die Polyether- und Urethangruppen enthalten.

Besonders gut geeignet als verzweigte Polyethersiloxane (E) sind verzweigte Polyether-Polysiloxan-Copolymere, wie sie z. B. in EP 1 076 073 A1, EP 1 424 117 A2 oder WO 2006/128624 A1 als Komponente von Entschäumern beschrieben sind.

Bevorzugte verzweigte Polyether-Polysiloxan-Copolymere sind solche, bei denen die Siloxanketten über seitenständige zweiwertige SiC-gebundene Kohlenwasserstoffreste, die Polyetherreste und Urethangruppen enthalten, miteinander verbunden sind.
Diese Polyether-Polysiloxan-Copolymere und deren Herstellung sind in WO 2006/128624 A1, insbesondere auf Seite 3, Zeile 8 bis Seite 13, Zeile 38, beschrieben (incorporated by reference).

Die erfindungsgemäßen Zusammensetzungen enthalten Polyethersiloxane (E) in Mengen von vorzugsweise 1 bis 200 Gewichtsteilen, bevorzugt 2 bis 100 Gewichtsteilen, jeweils bezogen auf 100 Gewichtsteile Komponente (A) und (B).

Die Siliconharze (F), die auch als MQ-Harze bezeichnet werden, können außerdem bis zu 10 Gew.-% freie Si-gebundene Hydroxy-oder Alkoxygruppen enthalten.

Vorzugsweise haben diese Organopolysiloxanharze (F) bei 25°C eine Viskosität größer 1 000 mPas oder sind Feststoffe. Das mit Gelpermeationschromatografie bestimmte gewichtsmittlere Molekulargewicht M_{w} (bezogen auf einen Polystyrolstandard) dieser Harze beträgt vorzugsweise 200 bis 200 000 g/mol, bevorzugt 1 000 bis 20 000 g/mol.

Komponente (F) sind handelsübliche Produkte bzw. können nach in der Siliciumchemie gängigen Verfahren, z. B. entsprechend "Parsonage, J. R.; Kendrick, D. A. (Science of Materials and Polymers Group, University of Greenwich, London, UK SE18 6PF) Spec. Publ. - R. Soc. Chem. 166, 98-106, 1995", US-A 2,676,182 oder EP-A 927 733 hergestellt werden.

Die erfindungsgemäßen Zusammensetzungen enthalten Organopolysiloxanharze (F) in Mengen von vorzugsweise 0,5 bis 30 Gewichtsteilen, bevorzugt 0,1 bis 10 Gewichtsteilen, jeweils bezogen auf 100 Gewichtsteile Komponente (A) und (B).

In einer bevorzugten Ausführungsform enthält die erfindungsgemäße Zusammensetzung als Komponente (G) auch von (A) und (B) verschiedene Organopolysiloxane aus Einheiten der allgemeinen Formel

R²ₖ(R⁵O)ₗSiO_{(4-k-l)/2} (VIII),

worin
- R²: die oben dafür angegebene Bedeutung hat,
- R⁵: gleich oder verschieden sein kann und einen einwertigen, linearen und/oder verzweigten Kohlenwasserstoffrest mit mindestens 6 Kohlenstoffatomen, vorzugsweise 6-30 Kohlenstoffatomen, bedeutet,
- k 0, 1, 2 oder 3: ist und
- 1 0, 1, 2 oder: 3 ist, durchschnittlich 0,005 bis 0,5 ist,
mit der Maßgabe, dass die Summe k+l≤3 ist, durchschnittlich 1,9 bis 2,1 ist.

Derartige Organopolysiloxane (G) sind beispielsweise durch alkalisch katalysierte Kondensation von silanolterminierten Polydimethylsiloxanen einer Viskosität 50 bis 50 000 mPa·s bei 25°C und aliphatischen Alkoholen mit mindestens 6 Kohlenstoffatomen, wie Isotridecylalkohol, n-Octanol, Stearylalkohol, 4-Ethyl-hexadecanol oder Eicosanol, zugänglich.

Die erfindungsgemäßen Zusammensetzungen enthalten Organopolysiloxane (G) in Mengen von vorzugsweise 0,5 bis 30 Gewichtsteilen, bevorzugt 1 bis 10 Gewichtsteilen, jeweils bezogen auf.100 Gewichtsteile Komponente (A) und (B).

Außer den Komponenten (A) bis (G) können die erfindungsgemäßen Zusammensetzungen weitere Stoffe enthalten, wie sie auch bisher in Entschäumerformulierungen verwendet worden sind.

Beispiele für weitere Stoffe sind wasserunlösliche organische Verbindungen (H). Unter dem Begriff "wasserunlöslich" soll im Sinne der vorliegenden Erfindung eine Löslichkeit in Wasser bei 25°C und einem Druck von 101,325 kPa von maximal 3 Gewichtsprozent verstanden werden.
Vorzugsweise handelt es sich bei den wasserunlösliche organische Verbindungen um solche mit einem Siedepunkt größer als 100°C bei dem Druck der umgebenden Atmosphäre, also bei 900 bis 1100 hPa, insbesondere um solche, ausgewählt aus Mineralölen, nativen Ölen, Isoparaffinen, Polyisobutylenen, Rückständen aus der Oxoalkoholsynthese, Estern niedermolekularer synthetischer Carbonsäuren, Fettsäureestern, wie z. B. Octylstearat, Dodecylpalmitat, Fettalkoholen, Ethern niedermolekularer Alkohole, Phthalaten, Estern der Phosphorsäure und Wachsen.

Die erfindungsgemäßen Zusammensetzungen enthalten wasserunlösliche organische Verbindung (H) in Mengen von bevorzugt 0 bis 1000 Gewichtsteilen, besonders bevorzugt 0 bis 100 Gewichtsteilen, jeweils bezogen auf 100 Gewichtsteile des Gesamtgewichts der Komponenten (A) bis (G).

Die erfindungsgemäßen Zusammensetzungen sind bevorzugt viskose klare bis opake farblose Flüssigkeiten.

Die erfindungsgemäßen Zusammensetzungen haben eine Viskosität von vorzugsweise 100 bis 2 000 000 mPas, besonders bevorzugt von 1000 bis 50 000 mPas jeweils bei 25°C und 101,325 kPa.

Bei den erfindungsgemäßen Zusammensetzungen kann es sich um Lösungen, Dispersionen oder Pulver handeln.

Das Herstellen der erfindungsgemäßen Zusammensetzungen kann nach bekannten Verfahren, wie z.B. durch Mischen aller Komponenten erfolgen, wie z.B. unter Anwendung von hohen Scherkräften in Kolloidmühlen, Dissolvern oder Rotor-Stator-Homogenisatoren. Dabei kann der Mischvorgang bei reduziertem Druck erfolgen, um das Einmischen von Luft, welche z. B. in hochdispersen Füllstoffen, wie den Kieselsäuren (C) und (D)., enthalten ist, zu verhindern. Im Anschluss kann bei Bedarf die in situ Hydrophobierung der Kieselsäuren (C) und/oder (D) erfolgen.

Gegenstand der Erfindung sind weiterhin Emulsionen enthalten erfindungsgemäße Zusammensetzungen,
Emulgatoren und
Wasser

Falls es sich bei den erfindungsgemäßen Zusammensetzungen um Emulsionen handelt, können alle Emulgatoren eingesetzt werden, die dem Fachmann zur Herstellung von Siliconemulsionen bekannt sind, wie z. B. anionische, kationische oder nichtionogene Emulgatoren. Bevorzugt werden Emulgatormischungen eingesetzt, wobei mindestens ein nichtionogener Emulgator, wie beispielsweise Sorbitanfettsäureestern, ethoxylierten Sorbitanfettsäureestern, ethoxylierten Fettsäuren, ethoxylierten linearen oder verzweigten Alkoholen mit 10 bis 20 Kohlenstoffatomen und/oder Glycerinestern, enthalten sein sollte. Weiterhin können als Verdicker bekannte Verbindungen, wie Polyacrylsäure, Polyacrylate, Celluloseether, wie Carboxymethylcellulose und Hydroxyethylcellulose, natürliche Verdicker, wie z. B. Xanthan Gum, und Polyurethane sowie Konservierungsmittel und andere übliche und dem Fachmann bekannte Zusätze zugesetzt werden.

Die kontinuierliche Phase der erfindungsgemäßen Emulsionen ist bevorzugt Wasser. Es können jedoch auch erfindungsgemäße Zusammensetzungen in Form von Emulsionen hergestellt werden, bei denen die kontinuierliche Phase durch die Komponenten (A) bis (G) gebildet oder durch wasserunlösliche organische Verbindung (H) gebildet wird. Es kann sich dabei auch um multiple Emulsionen handeln.

Verfahren zur Herstellung von Siliconemulsionen sind bekannt. Üblicherweise erfolgt die Herstellung durch einfaches Verrühren aller Bestandteile und ggf. anschließendes Homogenisieren mit Strahldispergatoren, Rotor-Stator-Homogenisatoren, Kolloidmühlen oder Hochdruckhomogenisatoren.

Falls es sich bei der erfindungsgemäßen Zusammensetzung um Emulsionen handelt, sind Öl in Wasser Emulsionen enthaltend 5 bis 50 Gew.-% Komponenten (A) bis (H), 1 bis 20 Gew.-% Emulgatoren und Verdicker und 30 bis 94 Gew.-% Wasser bevorzugt.

Die erfindungsgemäßen Zusammensetzungen können auch als frei fließende Pulver formuliert werden. Diese sind z. B. bei der Anwendung in pulverförmigen Waschmitteln bevorzugt. Die Herstellung dieser Pulver ausgehend von der Mischung der Komponenten (A) bis (E), (F), gegebenenfalls (G) und gegebenenfalls (H) erfolgt nach dem Fachmann bekannten Verfahren, wie Sprühtrocknung oder Aufbaugranulation und mit dem Fachmann bekannten Zusätzen.

Gegenstand der Erfindung sind weiterhin Pulver enthaltend erfindungsgemäße Zusammensetzungen und Trägermaterialien.

Die erfindungsgemäßen Pulver enthalten bevorzugt 2 bis 20 Gew.-% der erfindungsgemäßen Zusammensetzung enthaltend die Komponenten (A) bis (H). Als Träger kommen z. B. Zeolithe, Natriumsulfat, Cellulosederivate, Harnstoff und Zucker zum Einsatz. Die erfindungsgemäßen Pulver enthalten 50 bis 95 Gew.-% Trägermaterialien. Weitere Bestandteile der erfindungsgemäßen Pulver können z. B. Wachse sein oder organische Polymere, wie sie z. B. in EP-A 887 097 und EP-A 1 060 778 beschrieben sind.

Ein weiterer Gegenstand der vorliegenden Erfindung sind Wasch- und Reinigungsmittel und Pflegemittel, wie z.B. Weichspüler, enthaltend die erfindungsgemäßen Zusammensetzungen oder die erfindungsgemäßen Zusammensetzungen in Form von Emulsionen oder in Form von Pulvern.

Die erfindungsgemäßen Zusammensetzungen können überall eingesetzt werden, wo Zusammensetzungen auf der Basis von Organosiliciumverbindungen auch bisher eingesetzt wurden. Insbesondere können sie als Entschäumer eingesetzt werden.

Ein weiterer Gegenstand der vorliegenden Erfindung ist ein Verfahren zum Entschäumen und/oder zur Verhinderung des Schäumens von Medien, indem die erfindungsgemäßen Zusammensetzungen oder deren Emulsionen oder Pulver mit den Medien vermischt werden.

Überraschenderweise wurde gefunden, dass die Wirksamkeit und Handhabbarkeit der erfindungsgemäßen Entschäumerformulierungen durch die spezielle Mischung aus verschiednen Organopolysiloxanen, Kieselsäuren und Polyethersiloxanen wesentlich verbessert wird. Die erfindungsgemäßen Entschäumerformulierungen zeichnen sich besonders durch eine rasche und gleichmäßige Verteilung im schäumenden System, durch eine sehr gute Handhabbarkeit und Dosierbarkeit sowie durch eine hohe Wirksamkeit (Schnell- und Langzeitwirkung) aus.

Der Zusatz der erfindungsgemäßen Zusammensetzung zu den schäumenden Medien kann direkt erfolgen, in geeigneten Lösungsmitteln, wie Toluol, Xylol, Methylethylketon oder t-Butanol, gelöst, als Pulver oder als Emulsion. Die zur Erzielung der gewünschten Entschäumerwirkung notwendige Menge richtet sich z. B. nach der Art des Mediums, der Temperatur und der auftretenden Turbulenz.

Bevorzugt werden die erfindungsgemäßen Zusammensetzungen in Mengen von 0,1 Gew.-ppm bis 1 Gew.-%, insbesondere in Mengen von 1 bis 100 Gew.-ppm, zum schäumenden Medium zugegeben.

Das erfindungsgemäße Verfahren wird bei Temperaturen von bevorzugt -10 bis +150°C, besonders bevorzugt 5 bis 100°C, und dem Druck der umgebenden Atmosphäre, also etwa 900 bis 1100 hPa, durchgeführt. Das erfindungsgemäße Verfahren kann auch bei höheren oder niedrigeren Drücken durchgeführt werden, wie etwa bei 3000 bis 4000 hPa oder 1 bis 10 hPa.

Die erfindungsgemäßen Entschäumerzusammensetzungen können überall dort eingesetzt werden, wo störender Schaum unterdrückt werden soll. Das ist z. B. in nichtwässrigen Systemen wie bei der Teerdestillation oder der Erdölverarbeitung der Fall. Insbesondere eigenen sich die erfindungsgemäßen Entschäumerzusammensetzungen zur Bekämpfung von Schaum in wässrigen Tensidsystemen, für die Anwendung in Wasch- und Reinigungsmitteln, zur Bekämpfung von Schaum in Abwasseranlagen, bei Textilfärbeverfahren, bei der Erdgaswäsche, in Polymerdispersionen, und zum Entschäumen von bei der Zellstoffherstellung anfallenden wässrigen Medien.

Die erfindungsgemäßen Zusammensetzungen haben den Vorteil, dass sie als Entschäumer leicht handhabbar sind, und dass sie sich durch eine hohe, lang anhaltende Wirksamkeit in unterschiedlichsten Medien bei geringen Zusatzmengen auszeichnen. Das ist sowohl ökonomisch als auch ökologisch außerordentlich vorteilhaft.

Das erfindungsgemäße Verfahren hat den Vorteil, dass es einfach in der Durchführung und sehr wirtschaftlich ist.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanten bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

### Prüfungen der Entschäumerwirksamkeit

### 1. Antischaumkennzahl AKZ

In einer Vorrichtung entsprechend DE-A 25 51 260 werden 200 ml einer 4 Gew.-%igen wässrigen Lösung eines Natriumalkylsulfonates (Mersolat), die 10 mg des zu untersuchenden Entschäumers (gelöst in der 10-fachen Menge an Methyl-Ethyl-Keton) enthält, 1 Minute mit zwei gegenläufigen Rührern aufgeschäumt. Anschließend wir der Schaumzerfall aufgezeichnet. Aus der Fläche der Auftragung Schaumhöhe gegen die Zeit wird die Antischaumkennzahl berechnet. Je niedriger diese Zahl ist, desto wirksamer ist der Entschäumer.

### 2. Prüfung in Schwarzlauge

400 ml Schwarzablauge aus dem Zellstoffprozess(hardwood der Fa. UPM Kymmene Oy aus Kuusankoski, Finnland) werden in einer auf 80°C thermostatisierten 1000ml Umpumpapparatur mit einer Umpumpgeschwindigkeit von 1,51/min umgepumpt. Sobald das Schaumniveau eine Höhe von 75mm erreicht hat, wird der Entschäumer (10 mg bezogen auf die Komponenten (A) bis (E) und ggf. (F) und ggf. (G) in der Entschäumerformulierung) zudosiert, Schaumzerfallszeit und das niedrigste Schaumniveau, das nach Zugabe von Entschäumer und einsetzendem Schaumzerfall erreicht wird, werden festgehalten. Je kleiner die Schaumzerfallszeit t1 und je niedriger das Schaumniveau h1 sind, desto besser ist die Schnellwirkung eines Entschäumers. Danach wird die Langzeitwirkung des Entschäumers bestimmt, welche die Zeitspanne t2 darstellt, die benötigt wird, um vom niedrigsten Schaumniveau zum ursprünglichen Schaumniveau (75mm) zu kommen.

### Verwendete Stoffe:

Siloxan A1: ein mit Trimethylsiloxygruppen terminiertes Polydimethylsiloxan mit einer Viskosität von 100 mm²/s und einem Anteil an Silanolgruppen von 120 Gew. ppm
Siloxan A2: ein mit Trimethylsiloxygruppen terminiertes Polydimethylsiloxan mit einer Viskosität von 50 mm²/s und einem Anteil an Silanolgruppen von 110 Gew. ppm
Siloxan B1: ein mit Trimethylsiloxygruppen terminiertes Polydimethylsiloxan mit einer Viskosität von 1000 mm²/s und einem Anteil an Silanolgruppen von 150 Gew. ppm
Siloxan B2: ein mit Trimethylsiloxygruppen terminiertes Polydimethylsiloxan mit einer Viskosität von 8000 mm²/s und einem Anteil an Silanolgruppen von 350 Gew. ppm
Füllstoff C1: eine hydrophile gefällte Kieselsäure mit einer Oberfläche von 170 m²/g erhältlich unter der Bezeichnung Sipernat 383 DS bei der Evonik Degussa GmbH Frankfurt am Main
Füllstoff C2: eine hydrophobierte gefällte Kieselsäure mit einer Oberfläche von 90 m²/g erhältlich unter der Bezeichnung Sipernat D10 bei der Evonik Degussa GmbH Frankfurt am Main.
Füllstoff D1: eine hydrophile pyrogene Kieselsäure mit einer Oberfläche von 300 m²/g erhältlich unter der Bezeichnung HDK T30 bei der Wacker Chemie AG München
Polyethersiloxan E1: Dieses Polymer wird wie folgt hergestellt: 67 g eines mit Methylgruppen terminierten Siloxans aus Dimethylsiloxy- und Hydrogenmethylsiloxyeinheiten mit einem Aktivwasserstoffgehalt von 0,133 % und einer Viskosität von 72 mm²/s (25°C) werden unter kräftigem Rühren mit 408 g eines Allylpolyethers (560 ppm H₂O-Gehalt) mit einem PO/EO-Verhältnis von 4,0und einer Jodzahl von 11,2 vermischt und auf 100°C erwärmt. Durch Zugabe von 0,5 ml einer 2 %-igen Lösung von Hexachloroplatinsäure in Isopropanol wird die Hydrosilylierung gestartet, was sich in einer schwach exothermen Reaktion zeigt. Das Reaktionsgemisch wird bei 100 bis 110°C gehalten, bis ein klares Copolymer erhalten wird und kein Aktivwasserstoff mehr nachweisbar ist. Das Polysiloxan mit seitenständigen Polyethergruppen, hat eine Viskosität von 870 mm²/s (25°C) und einen Trübungspunkt von kleiner 25°C.
Organopolysiloxanharz F1: ein bei Raumtemperatur festen Siliconharzes aus Trimethylsiloxy- und SiO₂-Einheiten im Molverhältnis 0,61/1 mit einer gewichtsmittleren Molmasse von 5728 g/mol (bezogen auf Polystyrolstandard) und einem Gehalt an Si-gebunden Hydroxylgruppen von 0,8 Gew.%
Organopolysiloxan G1: Eine Kondensationsproduktes mit einer Viskosität von 180 mPas hergestellt aus Octyldodecanol und einem mit Silanolgruppen terminierten Polydimethylsiloxan mit einer Viskosität von 40 mPas
Additiv H1: ein Kohlenwasserstoffgemisches mit einem Siedebereich von 235-270°C

### Beispiel 1 (erfindungsgemäß):

21 Teile Organpolysiloxan B1, 16 Teile Organopolysiloxan B2, 3 Teile Füllstoff C1, 1 Teil Füllstoff D1, 1 Teil Organopolysiloxanharz F1 und 1 Teil Organopolysiloxan G1 werden vermischt und homogenisiert und in Gegenwart von 1500 ppm KOH 4h auf 150°C erhitzt. Anschließend werden 52 Teile Organopolysiloxan A1 und 6 Teile Polyethersiloxan E1 zugegeben und homogen eingemischt.
Die Viskosität der Zusammensetzung und die Antischaumkennzahl ist in Tabelle 1 angegeben.

### Vergleichbeispiel 1 (kein Polyethersiloxan E):

21 Teile Organpolysiloxan B1, 16 Teile Organopolysiloxan B2, 3 Teile Füllstoff C1, 1 Teil Füllstoff D1, 1 Teil Organopolysiloxanharz F1 und 1 Teile Mineralöl H1 werden vermischt und homogenisiert und in Gegenwart von 1500 ppm KOH 4h auf 150°C erhitzt. Anschließend werden 52 Teile Organopolysiloxan A1 zugegeben und homogen eingemischt.
Die Viskosität der Zusammensetzung und die Antischaumkennzahl ist in Tabelle 1 angegeben.

### Vergleichbeispiel 2 (kein Füllstoff C):

37 Teile Organopolysiloxan B2, 3 Teile Füllstoff D1, 1 Teil Organopolysiloxanharz F1 und 1 Teile Organopolysiloxan G1 werden vermischt und homogenisiert und in Gegenwart von 1500 ppm KOH 4h auf 150°C erhitzt. Anschließend werden 52 Teile Organopolysiloxan A1 und 6 Teile Polyethersiloxan E1 zugegeben und homogen eingemischt.
Die Viskosität der Zusammensetzung und die Antischaumkennzahl ist in Tabelle 1 angegeben.

### Vergleichbeispiel 3 (kein Organosiloxan A, kein Füllstoff D):

79 Teile Organpolysiloxan B1, 10 Teile Füllstoff C1, 1 Teil Organopolysiloxanharz F1 und 1 Teile Organopolysiloxan G1 werden vermischt und homogenisiert und in Gegenwart von 1500 ppm KOH 4h auf 150°C erhitzt. Anschließend werden 4 Teile Füllstoffe C2 und 6 Teile Polyethersiloxan E1 zugegeben und homogen eingemischt.
Die Viskosität der Zusammensetzung und die Antischaumkennzahl ist in Tabelle 1 angegeben.

**Tabelle 1: Antischaumkennzahl und Viskositäten von Beispiel 1 und Vergleichsbeispielen V1-V3**

| Beispiel/Vergleichsversuch | Viskosität in mPas | Antischaumkennzahl |
|---|---|---|
| 1 (erfindungsgemäß) | 1100 | 510 |
| V1 (nicht erfindungsgemäß) | 1020 | 640 |
| V2 (nicht erfindungsgemäß) | 2490 | 1420 |
| V3 (nicht erfindungsgemäß) | 7500 | 1320 |

### Beispiel 2:

27 Teile Organopolysiloxan B2, 2 Teile Füllstoff D1, Teil Organopolysiloxanharz F1 und 1 Teil Mineralöl H1 werden vermischt und homogenisiert und in Gegenwart von 1500 ppm KOH 4h auf 150°C erhitzt. Anschließend werden 60 Teile Organopolysiloxan A1, 6 Teile Füllstoff C2, und 8 Teile Polyethersiloxan E1 zugegeben und homogen eingemischt.

### Vergleichsbeispiel 4 (ohne Polyethersiloxan E):

27 Teile Organopolysiloxan B2, 2 Teile Füllstoff D1, 1 Teil Organopolysiloxanharz F1 und 1 Teil Mineralöl H1 werden vermischt und homogenisiert und in Gegenwart von 1500 ppm KOH 4h auf 150°C erhitzt. Anschließend werden 60 Teile Organopolysiloxan A1, und 6 Teile Füllstoff C2 zugegeben und homogen eingemischt.

### Vergleichsbeispiel 5 (ohne Füllstoff C):

27 Teile Organopolysiloxan B2, 2 Teile Füllstoff D1, 1 Teil Organopolysiloxanharz F1 und 1 Teil Mineralöl H1 werden vermischt und homogenisiert und in Gegenwart von 1500 ppm KOH 4h auf 150°C erhitzt. Anschließend werden 60 Teile Organopolysiloxan A1 und 8 Teile Polyethersiloxan E1 zugegeben und homogen eingemischt.

### Vergleichsbeispiel 6 (ohne Organosiloxan (A)):

27 Teile Organopolysiloxan B2, 2 Teile Füllstoff D1, 1 Teil Organopolysiloxanharz F1 und 1 Teil Mineralöl H1 werden vermischt und homogenisiert und in Gegenwart von 1500 ppm KOH 4h auf 150°C erhitzt. Anschließend werden 6 Teile Füllstoff C2 und 8 Teile Polyethersiloxan E1 zugegeben und homogen eingemischt.

Die o.g. Beispiele bzw. Vergleichsbeispiele werden unverdünnt mittels einer Pipette zur Prüfung in der Schwarzablauge zudosiert. Bis auf Vergleichsbeispiel 6 waren alle Mischungen ohne Probleme dosierbar.
Vergleichsbeispiel 6 ist aufgrund seiner hohen Viskosität von 100 000 mPas nur schwer handhabbar und nicht mehr dosierbar. Da die Handhabbarkeit und die Zudosierbarkeit bei der späteren Anwendung in einer Zellstoffmühle unbedingt erforderlich ist, wurde das hochviskose Vergleichsbeispiel 6 nicht weiter in der Schwarzablauge getestet.
Die Ergebnisse der Prüfung der Wirksamkeit sind in der Tabelle 2 zusammengefasst.

**Tabelle 2: Ergebnisse der Prüfung der Entschäumerwirksamkeit in Hartholz Schwarzablauge**

| Beispiel/ Vergleichsversuch | Schaumzerfallszeit t1 in [s] | Schaumniveau nach Schaumzerfall [mm] | Langzeitwirkung t2 in [s] |
|---|---|---|---|
| 2(erfindungsgemäß) | 14 | 15 | 344 |
| V4 (nicht erfindungsgemäß, ohne Polyethersiloxan) | 17 | 17 | 282 |
| V5 (nicht erfindungsgemäß, ohne Füllstoff C) | 20 | 22 | 270 |
| V6(nicht erfindungsgemäß, ohne Organosiloxan (A)):) | n.a. | n.a. | n.a. |
| | zu hohe Viskosität | zu hohe Viskosität | zu hohe Viskosität |

### Beispiel 3:

Es werden 100 Teile einer Entschäumerformulierung von Beispiel 1 werden bei 60°C mit 30 Teilen Sorbitanmonstearat (erhältlich unter der Bezeichnung "Span 60" bei Croda GmbH D-Nettetal) und 20 Teilen Polyoxyethylen(20)sorbitanmonostearate (erhältlich unter der Bezeichnung "Tween 60" bei Uniqema D-Emmerich) vermischt und schrittweise mit 500 Teilen Wasser verdünnt. Zu dieser Mischung werden 2 Teile einer Polyacrylsäure (erhältlich unter der Bezeichnung "Carbopol 934" bei BF Goodrich D-Neuss) gegeben, vermischt und weitere 345 Teile Wasser und 3 Teile eines Konservierungsmittels auf Isothiazolinonbasis (erhältlich unter der Bezeichnung "Acticide MV" bei der Thor-Chemie, D-Speyer) zugegeben. Anschließend wird die Emulsion bei 100 bar mit einem Hochdruckhomogenisator homogenisiert und mit 10%iger NaOH auf einen pH-Wert von 6-7 eingestellt.

Die erhaltene Entschäumeremulsion war hervorragend geeignet, um wässrige Tensidlösungen zu entschäumen.

### Beispiel 4:

35 ml einer 2 %igen Lösung eines hochmolekularen Copolymers aus Acrylsäure, Methacrylsäurestearat und Pentaerythritoldiallylether (im molaren Verhältnis 100:2:0,3) (die, wenn sie neutralsiert wird, eine Viskosität von 17 500 mm²/s aufweist) wurden in einem Becherglas vorgelegt, und unter intensivem Mischen mit einem Flügelrührer wurden 10 g der Entschäumerformulierung nach Beispiel 2 langsam zugegeben, so dass nach 10 Minuten Rühren eine Emulsion der Entschäumerformulierung in der Polymerlösung vorlag. Unter fortgesetztem Rühren wurden zu dieser Emulsion 88,5 g leichte Soda gegeben und anschließend das Wasser unter fortgesetztem Mischen unter Vakuum entfernt. Danach wurden 0,5 g einer hydrophilen Kieselsäure mit einer BET-Oberfläche von 200 m²/g (erhältlich bei der Wacker-Chemie GmbH unter der Bezeichnung HDK^{®} N20) zugemischt.
Es wurde ein weißes, rieselfähiges Pulver erhalten. Dieses wurde mit Erfolg zur Schaumverhinderung in pulverförmigen Waschmitteln oder in pulverförmigen Pflanzenschutzkonzentraten eingesetzt.

## Patentansprüche

1. Zusammensetzungen enthaltend
(A) im Wesentlichen lineare Organopolysiloxane mit einer Viskosität von 50 - 200 mm²/s bei 25°C und 1013 hPa der allgemeinen Formel
R²_{3-g}(R³O)_{g}Si-[OSiR²₂]ₙ-OSi(OR³)_{g}R²_{3-g} (IV),
worin
R² gleich oder verschieden sein kann und einen einwertigen, gegebenenfalls halogenierten Kohlenwasserstoffrest mit 1-30 Kohlenstoffatomen, vorzugsweise 1-18 Kohlenstoffatomen, oder ein Wasserstoffatom bedeutet,
R³ gleich oder verschieden sein kann und ein Wasserstoffatom oder einen einwertigen Kohlenwasserstoffrest mit 1-4 Kohlenstoffatomen bedeutet,
n eine ganze Zahl ist und einen solchen Wert hat, dass die Viskosität der Organopolysiloxane (A) 50 - 200 mm²/s bei 25°C und 1013 hPa, beträgt,
g 0 oder 1 ist, mit der Maßgabe, dass die Organopolysiloxane der Formel (IV) durchschnittlich einen Gehalt an Si-gebundenen OH-Gruppen von 30-500 Gew.-ppm aufweisen,
(B) Organopolysiloxane mit einer Viskosität von 500 - 200 000 mm²/s bei 25°C und 1013 hPa aus Einheiten der Formel
R²_{c}(R³O)_{d}SiO_{(4-c-d)/2} (II),
worin R² und R³ die oben dafür angegebene Bedeutung haben,
c 0, 1, 2 oder 3 ist und
d 0, 1, 2 oder 3 ist,
mit der Maßgabe, dass die Summe c+d≤3 ist und bei mehr als 50 % aller Einheiten der Formel (II) im Organopolysiloxan (B) die Summe c+d gleich 2 ist, wobei die Viskosität der Organopolysiloxane (B) durch die Anzahl der Einheiten der Formel (II) bestimmt wird
(C) gefällte Kieselsäuren mit einer BET-Oberfläche von 20 - 500 m²/g
(D) pyrogene Kieselsäuren mit einer BET-Oberfläche von 100 - 500 m²/g
(E) Polyethersiloxane mit einem Trübungspunkt kleiner als 50°C
(F) Organopolysiloxanharze, die im Wesentlichen aus R²₃SiO_{1/2} (M) - und SiO_{4/2} (Q) -Einheiten bestehen, wobei R² die oben dafür angegebene Bedeutung hat und wobei das molare Verhältnis von M- zu Q-Einheiten im Bereich von 0,5 bis 2,0 liegt,
(G) gegebenenfalls Organopolysiloxane, die verschieden zu (A) und (B) sind, und
(H) gegebenenfalls wasserunlösliche organische Verbindungen.

2. Zusammensetzungen nach Anspruch 1, **dadurch gekennzeichnet, dass** als Organopolysiloxane (B) im Wesentlichen lineare Organopolysiloxane der allgemeinen Formel
R²₃₋ₕ(R³O)ₕSi-[OSiR²₂]ₘ-OSi(OR³)ₕR²₃₋ₕ (V),
worin R² und R³ die im Anspruch 1 dafür angegebene Bedeutung haben,
m eine ganze Zahl ist und einen solchen Wert hat, dass die Viskosität der Organopolysiloxane (A) 500 - 200 000 mm²/s bei 25°C und 1013 hPa, beträgt,
h 0 oder 1 ist mit der Maßgabe, dass die Organopolysiloxane der Formel (V) durchschnittlich einen Gehalt an Si-gebundenen OH-Gruppen von 30-500 Gew.-ppm aufweisen, eingesetzt werden.

3. Zusammensetzungen nach Anspruch 1 oder 2, **dadurch gekennzeichnet, dass** als Polyethersiloxane (E) mit einem Trübungspunkt kleiner als 50°C lineare Polyethersiloxane der allgemeinen Formel
R²₃Si-[OSiR²₂]ₒ-[OSiZR²]ₚ-OSiR²₃ (VII),
wobei der Polyetherrest Z ein Reste der allgemeinen Formel
-R⁴-O-[CH₂-CH₂O]ₓ-[CH₂-CH(CH₃) O] _{y}-R⁵ (VI)
ist, wobei
x einen Wert von 0 - 100, bevorzugt 5 - 50, hat,
y einen Wert von 5 - 100, bevorzugt 5 - 50, hat,
wobei das Verhältnis x : y 4:1 bis 0:1 beträgt,
R⁴ einen zweiwertigen Kohlenwasserstoffrest mit 1-10 Kohlenstoffatomen bedeutet,
R⁵ gleich oder verschieden ist und ein Wasserstoffatom oder einen gegebenenfalls substituierten Kohlenwasserstoffrest mit 1-30 Kohlenstoffatomen oder ein Carboxyrest der Formel -C(O)R⁶, wobei der Rest R⁶ ein C₁₋₃-Alkylrest ist, bedeutet, R² die im Anspruch 1 dafür angegebene Bedeutung hat,
o eine ganze Zahl von 5 bis 500, bevorzugt 10 bis 100, ist und
p eine ganze Zahl von 1 bis 50, bevorzugt 2 bis 15, ist, eingesetzt werden.

4. Zusammensetzungen nach einem der Ansprüche 1 bis 3, **dadurch gekennzeichnet, dass** als Polyethersiloxane (E) Polyethersiloxane mit einem Trübungspunkt kleiner als 25°C eingesetzt werden.

5. Wässrige Emulsionen enthalten
Zusammensetzungen nach einem der Ansprüche 1 bis 4,
Emulgatoren und
Wasser

6. Pulver enthaltend
Zusammensetzungen nach einem der Ansprüche 1 bis 4 und Trägermaterialien.

7. Wasch- und Reinigungsmittel, enthaltend Zusammensetzungen nach einem der Ansprüche 1 bis 4 oder deren Emulsionen nach Anspruch 5 oder deren Pulver nach Anspruch 6.

8. Verfahren zum Entschäumen und/oder zur Verhinderung des Schäumens von Medien, indem die erfindungsgemäßen Zusammensetzungen nach einem der Ansprüche 1 bis 4 oder deren Emulsion nach Anspruch 5 oder deren Pulver nach Anspruch 6 mit den Medien vermischt werden.

9. Verfahren nach Anspruch 8, **dadurch gekennzeichnet, dass** bei der Zellstoffherstellung anfallende wässrige Medien eingesetzt werden.

## Claims

1. Compositions comprising
(A) substantially linear organopolysiloxanes having a viscosity of 50-200 mm²/s at 25°C and 1013 hPa of the general formula
R²_{3-g}(R³O)_{g}Si-[OSiR²₂]ₙ-OSi(OR³)_{g}R²_{3-g} (IV),
in which
R² may be identical or different and denotes a monovalent, optionally halogenated hydrocarbon radical having 1-30 carbon atoms, preferably 1-18 carbon atoms, or a hydrogen atom,
R³ may be identical or different and denotes a hydrogen atom or a monovalent hydrocarbon radical having 1-4 carbon atoms,
n is an integer and has a value such that the viscosity of the organopolysiloxanes (A) is 50-200 mm²/s at 25°C and 1013 hPa,
g is 0 or 1, with the proviso that the organopolysiloxanes of the formula (IV) have on average an Si-bonded OH group content of 30-500 ppm by weight,
(B) organopolysiloxanes having a viscosity of 500-200 000 mm²/s at 25°C and 1013 hPa, comprising units of the formula
R²_{c}(R³O)_{d}SiO_{(4-c-d)/2} (II),
in which R² and R³ have the definition indicated for them above,
c is 0, 1, 2 or 3, and
d is 0, 1, 2 or 3,
with the proviso that the sum c+d is ≤3 and in more than 50% of all the units of the formula (II) in the organopolysiloxane (B), the sum c+d is 2,
the viscosity of the organopolysiloxanes (B) being determined by the number of units of the formula (II)
(C) precipitated silicas having a BET surface area of 20-500 m²/g
(D) fumed silicas having a BET surface area of 100-500 m²/g
(E) polyethersiloxanes having a cloud point of less than 50°C
(F) organopolysiloxane resins which consist substantially of R²₃SiO_{1/2} (M) units and SiO_{4/2} (Q) units, where R² has the definition indicated for it above and where the molar ratio of M units to Q units is in the range from 0.5 to 2.0,
(G) optionally organopolysiloxanes different to (A) and (B), and
(H) optionally water-insoluble organic compounds.

2. Compositions according to Claim 1, **characterized in that** organopolysiloxanes (B) used comprise substantially linear organopolysiloxanes of the general formula
R²₃₋ₕ(R³O)ₕSi- [OSiR²₂]ₘ-OSi (OR³)ₕR²₃₋ₕ (V),
in which R² and R³ have the definition indicated for them in claim 1,
m is an integer and has a value such that the viscosity of the organopolysiloxanes (A) is 500-200 000 mm²/s at 25°C and 1013 hPa,
h is 0 or 1, with the proviso that the organopolysiloxanes of the formula (V) have on average an Si-bonded OH group content of 30-500 ppm by weight.

3. Compositions according to Claim 1 or 2, **characterized in that** polyethersiloxanes (E) used, having a cloud point of less than 50°C, comprise linear polyethersiloxanes of the general formula
R²₃Si-[OSiR²₂]ₒ- [OSiZR²] p-OSiR²₃ (VII),
where the polyether radical Z is a radical of the general formula
-R⁴-O- [CH₂-CH₂O]ₓ- [CH₂-CH(CH₃)O]_{y}-R⁵ (VI)
where
x has a value of 0-100, preferably 5-50,
y has a value of 5-100, preferably 5-50,
the ratio x:y being 4:1 to 0:1,
R⁴ denotes a divalent hydrocarbon radical having 1-10 carbon atoms,
R⁵ is identical or different and denotes a hydrogen atom or an optionally substituted hydrocarbon radical having 1-30 carbon atoms or a carboxyl radical of the formula -C(O)R⁶, where the radical R⁶ is a C₁₋₃ alkyl radical,
R² has the definition indicated for it in claim 1,
o is an integer from 5 to 500, preferably 10 to 100, and
p is an integer from 1 to 50, preferably 2 to 15.

4. Compositions according to any of Claims 1 to 3, **characterized in that** polyethersiloxanes (E) used comprise polyethersiloxanes having a cloud point of less than 25°C.

5. Aqueous emulsions comprising
compositions according to any of Claims 1 to 4,
emulsifiers, and
water.

6. Powder comprising
compositions according to any of Claims 1 to 4 and carrier materials.

7. Detergents comprising compositions according to any of Claims 1 to 4 or emulsions thereof according to Claim 5 or powder thereof according to Claim 6.

8. Method for defoaming and/or for preventing the foaming of media, by mixing the compositions of the invention according to any of Claims 1 to 4 or emulsions thereof according to Claim 5 or powder thereof according to Claim 6 with the media.

9. Method according to Claim 8, **characterized in that** aqueous media produced during the production of pulp are used.

## Revendications

1. Compositions contenant
(A) des organopolysiloxanes essentiellement linéaires ayant une viscosité de 50 - 200 mm²/s à 25 °C et sous 1 013 hPa, de formule générale
R²_{3-g}(R³O)_{g}Si- [OSiR²₂] ₙ-OSi (OR³)_{g}R²_{3-g} (IV),
dans laquelle
R² peut être le même ou différent et représente un radical hydrocarboné monovalent, éventuellement halogéné, ayant 1-30 atomes de carbone, de préférence 1-18 atomes de carbone, ou un atome d'hydrogène,
R³ peut être le même ou différent et représente un atome d'hydrogène ou un radical hydrocarboné monovalent ayant 1-4 atomes de carbone,
n est un nombre entier et a une valeur telle que la viscosité des organopolysiloxanes (A) vaut 50 - 200 mm²/s à 25 °C et sous 1 013 hPa,
g est 0 ou 1,
étant entendu que les organopolysiloxanes de formule (IV) ont en moyenne une teneur en groupes OH liés à Si de 30-500 ppm en poids,
(B) des organopolysiloxanes ayant une viscosité de 500 - 200 000 mm²/s à 25 °C et sous 1 013 hPa, à base de motifs de formule
R²_{c}(R³O)_{d}SiO_{(4-c-d)/2} (II),
dans laquelle R² et R³ ont la signification indiquée ci-dessus pour ces symboles,
c est 0, 1, 2 ou 3 et
d est 0, 1, 2 ou 3,
étant entendu que la somme c+d est ≤ 3 et dans plus de 50 % de tous les motifs de formule (II) dans l'organopolysiloxane (B) la somme c+d est égale à 2,
la viscosité des organopolysiloxanes (B) étant dictée par le nombre des motifs de formule (II)
(C) des silices précipitées ayant une surface BET de 20 - 500 m²/g
(D) des silices pyrogénées ayant une surface BET de 100 - 500 m²/g
(E) des polyéthersiloxanes ayant un point de trouble inférieur à 50 °C
(F) des résines organopolysiloxane qui sont essentiellement constituées de motifs R²₃SiO_{1/2} (M) et SiO_{4/2} (Q), R² ayant la signification indiquée plus haut pour ce symbole et le rapport molaire des motifs M aux motifs Q se situant dans la plage de 0,5 à 2,0,
(G) éventuellement des organopolysiloxanes qui sont différents de (A) et (B), et
(H) éventuellement des composés organiques insolubles dans l'eau.

2. Compositions selon la revendication 1, **caractérisées en ce qu'**on utilise comme organopolysiloxanes (B) des organopolysiloxanes essentiellement linéaires de formule générale
R²₃₋ₕ(R³O)ₕSi- [OSiR²₂]ₘ-OSi(OR³)ₕR²₃₋ₕ (V),
dans laquelle R² et R³ ont la signification indiquée pour ces symboles dans la revendication 1,
m est un nombre entier et a une valeur telle que la viscosité des organopolysiloxanes (A) à 25 °C et sous 1 013 hPa vaut 500 - 200 000 mm²/s,
h est 0 ou 1, étant entendu que les organopolysiloxanes de formule (V) présentent en moyenne une teneur en groupes OH liés à Si de 30-500 ppm en poids.

3. Compositions selon la revendication 1 ou 2, **caractérisées en ce qu'**on utilise comme polyéthersiloxanes (E) ayant un point de trouble inférieur à 50 °C
des polyéthersiloxanes linéaires de formule générale
R²₃Si-[OSiR²₂]ₒ-[OSiZR²]ₚ-OSiR²₃ (VII),
le radical polyéther Z étant un radical de formule générale
-R⁴-O-|CH₂-CH₂O]ₓ-[CH₂-CH(CH₃)O]_{y}-R⁵ (VI),
où
x a une valeur de 0 - 100, de préférence de 5 - 50,
y a une valeur de 5 - 100, de préférence de 5 - 50, le rapport x : y valant de 4:1 à 0:1,
R⁴ représente un radical hydrocarboné divalent ayant 1-10 atomes de carbone,
R⁵ est le même ou différent et représente un atome d'hydrogène ou un radical hydrocarboné éventuellement substitué ayant 1-30 atomes de carbone ou un radical carboxy de formule -C(O)R⁶, le radical R⁶ étant un radical alkyle en C₁-C₃,
R² a la signification indiquée pour ce symbole dans la revendication 1,
o est un nombre entier valant de 5 à 500, de préférence de 10 à 100 et
p est un nombre entier valant de 1 à 50, de préférence de 2 à 15.

4. Compositions selon l'une quelconque des revendications 1 à 3, **caractérisées en ce qu'**on utilise comme polyéthersiloxanes (E) des polyéthersiloxanes ayant un point de trouble inférieur à 25 °C.

5. Émulsions aqueuses contenant
des compositions selon l'une quelconque des revendications 1 à 4,
des émulsifiants et
de l'eau.

6. Poudres contenant
des compositions selon l'une quelconque des revendications 1 à 4 et des matières porteuses.

7. Produit de lavage et de nettoyage, contenant des compositions selon l'une quelconque des revendications 1 à 4, ou leurs émulsions selon la revendication 5 ou leurs poudres selon la revendication 6.

8. Procédé pour l'élimination de mousse ou pour l'empêchement de la formation de mousse de milieux, par mélange des compositions conformes à l'invention selon l'une quelconque des revendications 1 à 4 ou de leurs émulsions selon la revendication 5 ou de leurs poudres selon la revendication 6 avec les milieux.

9. Procédé selon la revendication 8, **caractérisé en ce qu'**on utilise des milieux aqueux formés dans la production de la cellulose.
